# EUROPÄISCHE PATENTSCHRIFT

(11) **EP 3 599 125 B1**
(45) Veröffentlichungstag und Bekanntmachung des Hinweises auf die Patenterteilung: **23.09.2026**
(21) Anmeldenummer: 19181747.7
(22) Anmeldetag: 21.06.2019
(51) Int. Cl.: B60L 3/00, B60L 3/04

(54) **TRAKTIONSNETZ UND VERFAHREN ZUM BETREIBEN EINES TRAKTIONSNETZES EINES ELEKTRISCH ANGETRIEBENEN FAHRZEUGS IM KURZSCHLUSSFALL**
TRACTION NETWORK AND METHOD FOR OPERATING A TRACTION NETWORK OF AN ELECTRICALLY DRIVEN VEHICLE IN THE CASE OF A SHORT CIRCUIT
RÉSEAU DE TRACTION ET PROCÉDÉ DE FONCTIONNEMENT D'UN RÉSEAU DE TRACTION D'UN VÉHICULE ÉLECTRIQUE EN CAS DE COURT-CIRCUIT

(30) Priorität: 25.07.2018 DE 102018212405
(43) Veröffentlichungstag der Anmeldung: 29.01.2020
(73) Patentinhaber: Volkswagen AG, 38440 Wolfsburg (DE)
(72) Erfinder: Albrecht, Fabian, 38442 Wolfsburg (DE); Sommerfeld, Marcus, 38106 Braunschweig (DE)

(56) Entgegenhaltungen:
- DE-A1- 102007 048 620
- DE-A1- 102010 056 006
- DE-A1- 102012 008 626
- DE-A1- 102012 018 321
- DE-A1- 102016 106 661

## Beschreibung

Die Erfindung betrifft ein Traktionsnetz und ein Verfahren zum Betreiben eines Traktionsnetzes eines elektrisch angetriebenen Fahrzeugs im Kurzschlussfall.

Bei elektrisch angetriebenen Kraftfahrzeugen ist es bekannt, eine Fortbewegungskraft oder auch Traktionskraft durch eine Mehrzahl redundanter elektrischer Antriebseinheiten zu erzeugen. Die Antriebseinheiten können jeweils wenigstens eine elektrische Maschine zum Erzeugen der Traktionskraft umfassen und Bestandteil eines Traktionsnetzes (oder auch Traktionsstromnetzes) des Fahrzeugs sein. Durch Vorsehen einer entsprechenden Mehrzahl von Antriebseinheiten wird ermöglicht, dass im Fall einer Störung von einer der Antriebseinheiten zumindest ein Teil der vor dem Störfall bereitgestellten Traktionskraft durch die weitere Antriebseinheit bereitgestellt werden kann. Je nach gewünschtem Sicherheitsniveau kann das Kraftfahrzeug dabei über eine gewisse Mindestzeitdauer weiterbetrieben werden, beispielsweise um es auf einem Standstreifen oder einem vergleichbaren Ort außerhalb des regulären Verkehrsflusses zum Stehen bringen zu können. Insbesondere für autonom fahrende (d.h. ohne oder nur stark begrenzte menschliche Einflüsse fahrende Kraftfahrzeuge) kann es aber gewünscht sein, dass das Fahrzeug selbst bei einer Störung von einer der Antriebseinheiten in der Lage ist, das Ziel einer vorgegebenen Fahrstrecke zu erreichen.

Ein typischer Störfall betrifft einen Kurzschluss in einer der Antriebseinheiten und/oder in einem Verteilungspfad zwischen einer Spannungsquelle und einer Antriebseinheit. Bisher ist es nicht mit einer ausreichenden Sicherheit möglich, bei einem Kurzschluss in einer der Antriebseinheiten (oder dem dazugehörigen Verteilungspfad dieser Antriebseinheit) mit einer ausreichenden Sicherheit zu gewährleisten, dass das Erzeugen einer gewünschten Traktionskraft durch die noch verbleibende (nicht gestörte) Antriebseinheit mit einer ausreichenden Zuverlässigkeit möglich ist. Stattdessen können bei bisher angedachten Systemen sogar Fälle auftreten, bei denen ein Kurzschluss in einer der Antriebseinheiten (und/oder in den dazugehörigen Verteilungspfaden) zu einem Totalausfall des gesamten Traktionsnetzes führen, sodass das Fahrzeug vergleichsweise schnell zum Stillstand kommt.

Aus der DE 10 2016 106 661 A1 ist ein gattungsgemäßes Verfahren zum Betreiben eines Traktionsnetzes eines elektrisch angetriebenen Fahrzeugs im Kurzschlussfall bekannt.

Aus der DE 10 2010 056 006 A1 ist ein Verfahren zur Überwachung eines Leitungsnetzes für ein Fahrzeug bekannt, wobei das Leitungsnetz mehrere Komponenten umfasst, wobei ein Stromkreis zur Überwachung des Leitungsnetzes bereitgestellt wird, wobei mindestens einer der Komponenten mindestens ein jeweiliger Widerstand des Stromkreises zugeordnet ist, wobei ein Gesamtwiderstand des Stromkreises erfasst wird, und wobei eine Änderung des Gesamtwiderstandes überwacht wird, und wobei eine Aktion bezüglich des Leistungsnetzes ausgeführt wird, wenn die Änderung des Gesamtwiderstandes größer als ein vorgegebener Wert erfasst wird.

Aus der DE 10 2007 048 620 A1 ist ein Verbindungsüberwachungsverfahren für ein Fahrzeug bekannt, das eine Hochspannungsenergiequelle und eine Hochspannungsenergielast aufweist, wobei das Verfahren die Schritte umfasst, dass:
- eine Spannung von der Hochspannungsenergiequelle an die Hochspannungsenergielast angelegt wird;
- eine Spannungsanstiegsrate für die Hochspannungsenergielast überwacht wird; und
- die Hochspannungsenergiequelle von der Hochspannungsenergielast getrennt wird, wenn die Spannungsanstiegsrate schneller als eine Schwellenwertrate ist.

Aus der DE 10 2012 018 321 A1 ist ein Verfahren zum Trennen eines Batteriesystems unter Last bekannt, wobei das Batteriesystem mittels eines ersten und eines zweiten elektrischen Leiters mit einem elektrischen Verbraucher elektrisch verbindbar ist. Weiter ist ein erster und zweiter Schaltschütz vorgesehen, wobei parallel zum ersten Schaltschütz eine Reihenschaltung eines Vorladerelais und eines Vorladewiderstands vorgesehen ist, wobei bei geschlossenen Schaltschützen in einem ersten Schritt das Vorladerelais geschlossen wird, danach in einem zweiten Schritt das in Reihenschaltung mit dem Vorladerelais verbundene erste Schaltschütz geöffnet wird und danach in einem dritten Schritt das zweite Schaltschütz und/oder das Vorladerelais geöffnet wird.

Aus der DE 10 2012 008 626 A1 ist ein Verfahren zur Fehlererkennung eines Vorladevorgangs für eine elektrische Last mit einem kapazitiven Element, insbesondere einem Zwischenkreiskondensator, bekannt. Dabei wird der Vorladevorgang durch Schließen eines Stromkreises mit Hilfe einer Vorladeschaltung gestartet und eine Angabe über einen Stromfluss durch die Vorladeschaltung erfasst. Dabei wird ein Fehler erkannt, wenn die Angabe über den Stromfluss nicht innerhalb einer vorbestimmten Zeitdauer nach dem Starten des Vorladevorgangs unter einen vorgegebenen Schwellwert fällt.

Eine Aufgabe der Erfindung besteht darin, die Zuverlässigkeit eines Traktionsnetzes für elektrisch angetriebene Kraftfahrzeuge zu verbessern, insbesondere hinsichtlich dem Auftreten von Kurzschlüssen und ferner insbesondere bei einer Mehrzahl von redundant betreibbaren Antriebseinheiten in dem Traktionsnetz.

Diese Aufgabe wird durch ein Verfahren mit den Merkmalen des Patentanspruchs 1 und ein Traktionsnetz mit den Merkmalen des Patentanspruchs 5 gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegenden Erfindung vorgesehen sein können, sofern nicht anders angegeben oder ersichtlich.

Eine Grundidee der Erfindung liegt darin, statt dem Erkennen eines Kurzschlusses und dem kontrollierten elektrischen Abschalten der Antriebseinheiten oder auch des gesamten Traktionsnetzes eine präzisere Detektion des Kurzschlussortes vorzunehmen und daraufhin das Traktionsnetz zum Erzeugen einer Traktionskraft soweit wie möglich weiter zu betreiben. Insbesondere ist vorgesehen, nur denjenigen Bereich des Traktionsnetzes elektrisch abzuschalten und/oder elektrisch zu trennen, der von dem Kurzschluss betroffen ist. Ein noch betriebsfähiger Bereich oder Anteil des Traktionsnetzes soll hingegen zum Erzeugen einer Traktionskraft weiter betrieben werden. Als Kurzschlussort kommt dabei insbesondere eine von dem Kurzschluss betroffene Antriebseinheit aus einer Mehrzahl von Antriebseinheiten in Betracht und/oder ein elektrischer Verteilungspfad, der eine der Antriebseinheiten z.B. mit einer Spannungsquelle verbindet.

Im Detail wird ein Verfahren zum Betreiben eines Traktionsnetzes eines elektrisch angetriebenen Fahrzeugs (oder eines elektrisch angetriebenen Kraftfahrzeugs und insbesondere eines elektrisch angetriebenen Personenkraftwagens) im Kurzschlussfall vorgeschlagen, wobei das Traktionsnetz eine Spannungsquelle (z.B. eine Batterie) umfasst sowie mindestens zwei über jeweilige elektrische Verteilungspfade mit der Spannungsquelle verbundene elektrische Antriebseinheiten (z.B. jeweils umfassend wenigstens eine elektrische Maschine zum Erzeugen einer Traktionskraft), wobei in dem Verteilungspfad einer jeden Antriebseinheit wenigstens ein elektrisches Trennelement zur selektiven (d.h. selektiv aktivierbaren) Trennung von der Spannungsquelle angeordnet ist, wobei das Verfahren bei einer Detektion eines Kurzschlusses in dem Traktionsnetz umfasst:
- Detektieren, in welchem Verteilungspfad und/oder in welcher Antriebseinheit der Kurzschluss vorliegt;
- Betreiben des Traktionsnetz in einem fahrbereiten Zustand, wobei lediglich diejenige Antriebseinheit von der Spannungsquelle getrennt ist, in der oder in deren Verteilungspfad der Kurzschluss vorliegt.

Bei der Spannungsquelle kann es sich insbesondere um eine Hochvoltbatterie handeln. Jede Antriebseinheit kann über wenigstens einen eigenen elektrischen Verteilungspfad mit der Spannungsquelle verbunden sein. Die elektrischen Verteilungspfade können jedoch selbst zumindest mittelbar miteinander verbunden sein, beispielsweise wenn sie an gemeinsame Pole der Spannungsquelle angeschlossen sind. Ein Verteilungspfad kann allgemein durch eine elektrische Leitung und/oder einen elektrischen Leiter bereitgestellt sein.

Die Antriebseinheiten können jeweils wenigstens eine elektrische Antriebsmaschine sowie für den Betrieb der Antriebsmaschine benötigte elektrische Komponenten umfassen. Hierbei kann es sich z.B. um Stromrichter handeln und/oder Nebenverbraucher, wie beispielsweise ein Kühl- oder Klimatisierungssystem für die wenigstens eine Antriebsmaschine. Allgemein können die Antriebseinheiten gleichartig zueinander ausgebildet sein. Jede Antriebseinheit kann ferner wenigstens eine Kapazität umfassen. Diese kann durch Kapazitäten verschiedener Komponenten und Bauteile eines jeweiligen Antriebs gebildet werden bzw. sich daraus zusammensetzen (beispielsweise durch die Kapazität eines Stromrichters und insbesondere eines Gleichspannungswandlers). Im Folgenden wird deshalb auch auf eine Kapazität, eine Kondensatorkapazität und/oder etwaige Kondensatorentladungen der Antriebseinheiten Bezug genommen.

Die Verteilungspfade können Bestandteil eines elektrischen Verteilers sein. Letzterer kann zwischen der Spannungsquelle und den Antrieben positioniert bzw. geschaltet sein und diese elektrisch miteinander verbinden. Die Verteilungspfade können weitere elektrische Komponenten umfassen, um die gewünschten Verfahrensschritte und/oder Traktionsnetzfunktionen bereitstellen zu können. Hierbei kann es sich z.B. um nachstehend erläuterte Strommesseinrichtungen, Spannungsmesseinrichtungen, elektrische Trennelemente, Kurzschlussdetektionseinrichtungen, eine Steuereinrichtung und/oder eine Vorladeeinrichtung handeln. Übergeordnet können die Verteilungspfade der elektrischen Antriebseinheiten gleichartig zueinander ausgebildet sein. Insbesondere können die elektrischen Verteilungspfade gleichartige und auch eine gleiche Anzahl von elektrischen Komponenten der vorstehend aufgelisteten Art umfassen. Es kann aber auch vorgesehen sein, die Verteilungspfade verschiedenartig voneinander auszubilden.

Weiter kann wenigstens einer der Verteilungspfade dazu eingerichtet sein, weitere Verbraucher abseits des Antriebs mit elektrischer Energie zu versorgen, beispielsweise über einen Unterpfad, eine Verzweigung und/oder eine Unterverteilung innerhalb des Verteilungspfads. Mögliche Verbraucher sind zum Beispiel eine Innenraumklimatisierung oder ein Ladegerät.

Die elektrischen Trennelemente können dazu ausgebildet sein, die Antriebseinheiten zumindest einmalig von der Spannungsquelle elektrisch zu trennen. Insbesondere können die elektrischen Trennelemente aber dazu ausgebildet sein, die Antriebseinheit und die Spannungsquelle reversibel von der Spannungsquelle zu trennen (d.h. die Antriebseinheit auch wieder mit der Spannungsquelle elektrisch zu verbinden und/oder allgemein wenigstens einmal öffen- und wieder schließbar sein).

Im Rahmen der vorliegenden Offenbarung kann als ein möglicher Kurzschlussort eine Antriebseinheit und/oder ein hierzu gehöriger Verteilungspfad identifiziert werden. Eine genauere örtliche Auflösung beispielsweise in der Weise, dass eine den Kurzschluss aufweisende elektrische Komponente in einer Antriebseinheit und/oder einem dazugehörigen Verteilungspfad exakt identifiziert wird, kann vorteilhaft sein, ist aber nicht zwingend notwendig. Stattdessen kann es ausreichen, lediglich denjenigen Verteilungspfad und/oder diejenige Antriebseinheit zu identifizieren, in der der Kurzschluss vorliegt.

Unter einem fahrbereiten Zustand kann ein Zustand verstanden werden, in dem das Traktionsstromnetz prinzipiell in der Lage ist, eine Traktionskraft zu erzeugen, beispielsweise wenn dies von einem Fahrer oder einer den Fahrbetrieb steuernden Steuereinheit angefordert wird. Der fahrbereite Zustand unterscheidet sich somit von einem elektrisch abgeschalteten Zustand, in dem beispielsweise aus Sicherheitsgründen und in Reaktion auf etwaige Störungen sämtliche Antriebseinheiten und/oder Verteilungspfade von der Spannungsquelle elektrisch getrennt werden. Stattdessen kann erfindungsgemäß vorgesehen sein, eine elektrische Verbindung zwischen wenigstens einer Antriebseinheit und der Spannungsquelle über den Verteilungspfad diese Antriebseinheit aufrechtzuerhalten und insbesondere ein elektrisches Trennelement in dem entsprechenden Verteilungspfad in einem geschlossenen (d.h. stromleitenden) Zustand zu belassen oder in diesen Zustand zu versetzen.

Eine erste Alternative des Verfahrens und des Traktionsstromnetzes sieht vor, dass zum Detektieren des den Kurzschluss aufweisenden Verteilungspfads und/oder der den Kurzschluss aufweisenden Antriebseinheit ein Stromfluss zwischen den Verteilungspfaden detektiert wird. Hierdurch wird allgemein die Möglichkeit geschaffen, die Antriebseinheit und/oder den Verteilungspfad, in dem bzw. in der der Kurzschluss vorliegt, besonders zuverlässig zu detektieren. Allgemein haben die Erfinder erkannt, dass in demjenigen Pfad, in dem der Kurzschluss vorliegt oder der mit derjenigen Antriebseinheit verbunden ist, die den Kurzschluss aufweist, ein im Wesentlichen konstanter Kurzschlussstrom vorliegt, dessen Höhe maßgeblich von Eigenschaften der Spannungsquelle bestimmt wird (beispielsweise von inneren Widerständen der Spannungsquelle). In demjenigen Pfad, der oder dessen Antriebseinheit nicht von dem Kurzschluss betroffen ist, kann hingegen ein Kondensatorentladungsstrom der Kapazität(en) der dazugehörigen Antriebseinheit vorliegen. Dies kann über eine Strommesseinrichtung in dem entsprechenden Verteilungspfad detektiert werden. Dabei versteht es sich, dass ein solcher Entladungsstrom zu dem vom Kurzschluss betroffenen Verteilungspfad fließt und somit zumindest anteilig einen Stromfluss zwischen den Verteilungspfaden definiert.

Weiter ist ferner vorgesehen, dass dann, wenn der Stromfluss von einem ersten Verteilungspfad zu einem zweiten Verteilungspfad abnimmt, detektiert wird, dass der Kurzschluss in dem zweiten Verteilungspfad oder der hiermit verbundenen Antriebseinheit vorliegt. Durch dieses Kriterium kann zuverlässig festgestellt werden, dass es sich bei dem detektierten Stromfluss um einen Kondensatorentladestrom der vorstehend geschilderten Art handelt. Somit kann zuverlässig auf das Vorliegen eines Kurzschlusses in dem entsprechend anderen Verteilungspfad bzw. in der hiermit verbundenen Antriebseinheit geschlossen werden.

Eine Weiterbildung dieser Alternative und des Traktionsstromnetzes sieht vor, dass die elektrischen Trennelemente in den Verteilungspfaden zunächst in einem nicht-trennenden Zustand verbleiben, wenn ein Kurzschluss detektiert wird. Statt also unmittelbar das Traktionsnetz elektrisch abzuschalten und insbesondere die Antriebseinheiten von der Spannungsquelle zu trennen, kann somit eine gewisse Entprellung bereitgestellt werden. Anders ausgedrückt kann eine zusätzliche Zeitdauer (Entprellzeit) definiert werden, in der derjenige Verteilungspfad und/oder diejenige Antriebseinheit detektiert werden kann, in der der Kurzschluss vorliegt. Anschließend kann, wie vorstehend und nachstehend beschrieben, nur derjenige Verteilungspfad und/oder diejenige Antriebseinheit elektrisch getrennt werden, welche den Kurzschluss aufweist. Der entsprechende andere Verteilungspfad bzw. die entsprechend andere Antriebseinheit kann hingegen in einem fahrbereiten Zustand belassen werden, um nach wie vor das Erzeugen einer Traktionskraft zu ermöglichen.

Insbesondere kann eine vorbestimmte Zeitdauer definiert sein, in der die Trennelemente zunächst in einem nicht-trennenden Zustand verbleiben. Diese Zeitdauer kann z.B. mehrere Millisekunden und insbesondere bis zu 50 ms, bis zu 30 ms oder bis zu 20 ms betragen. Wird innerhalb dieser Zeitdauer nicht detektiert, in welchem Verteilungspfad und/oder in welcher Antriebseinheit der Kurzschluss vorliegt, können beide elektrischen Trennelemente aus Sicherheitsgründen in einen trennenden Zustand versetzt werden. Bevorzugt ist die Zeitdauer aber derart lang gewählt, dass das Detektieren des Verteilungspfades und/oder der Antriebseinheit mit dem Kurzschluss mit einer hohen Wahrscheinlichkeit innerhalb dieser Zeitdauer gelingt. Eine geeignete Zeitdauer kann z.B. experimentell oder per Simulation ermittelt werden und z.B. die vorstehend genannten Werte annehmen.

Mit anderen Worten kann also vorgesehen sein, dass ein Versetzen von wenigstens einem (und vorzugsweise genau einem) der elektrischen Trennelemente in einen trennenden Zustand erst dann erfolgt, wenn eine vorbestimmte Mindestzeitdauer abgelaufen ist und/oder der den Kurzschluss aufweisende Verteilungspfad und/oder die Antriebseinheit detektiert wurde. Wie geschildert, kann hierbei vorgesehen sein, dass lediglich dasjenige elektrische Trennelement in den trennenden Zustand versetzt wird, dessen Verteilungspfad und/oder Antriebseinheit den Kurzschluss aufweist.

Gemäß einer weiteren Ausführungsform von Verfahren und Traktionsnetz weisen die elektrischen Trennelemente eine vorbestimmte Kurzschlussfestigkeit auf. Dies ist insbesondere dann relevant, wenn gemäß der vorigen Ausführungsform die elektrischen Trennelemente zunächst in einem nicht-trennenden Zustand verbleiben. Beispielsweise muss die elektrische Kurzschlussfestigkeit derart bemessen sein, dass eine definierte Zeitdauer der vorstehend erläuterten Art eingehalten werden kann, in der die elektrischen Trennelemente zunächst in einem nicht-trennenden Zustand verbleiben und folglich während dieser Zeitdauer einem etwaigen Kurzschlussstrom ausgesetzt sein können.

Allgemein kommen als elektrische Trennelemente Schütze und/oder elektromagnetische Relais infrage. Weiter können Halbleiterelemente verwendet werden (z.B. IGBTs oder MOSFETs). Weiter können pyrotechnische Trennelemente vorgesehen sein (englisch: pyrofuse), wie sie beispielsweise unter dem Namen Pyroswitch von der Firma Autoliv mit Sitz in Stockholm (Schweden) vertrieben werden. Letztere können durch elektrisches Zünden eines pyrotechnischen Sprengsatzes die Verteilungspfade einmalig und insbesondere dauerhaft durchtrennen, sodass die damit gekoppelte Antriebseinheit nicht mehr durch die Spannungsquelle mit Strom versorgbar ist. Es können auch Kombinationen derartiger Trennelemente z.B. in einem gemeinsamen Verteilungspfad vorgesehen sein.

Gemäß einer Ausführungsform umfasst jeder Verteilungspfad ein elektromechanisches Relais sowie ein in Reihe dazu geschaltetes pyrotechnisches Trennelement. Das elektromechanische Relais bleibt beispielsweise während der vorstehend geschilderten definierten Zeitdauer nach der Detektion eines Kurzschlusses geschlossen und das pyrotechnische Trennelement löst nur in demjenigen Verteilungspfad aus, in dem oder in dessen dazugehöriger Antriebseinheit der Kurzschluss detektiert wird.

Ist als elektronisches Trennelement ein Halbleiterbauelement vorgesehen, kann hingegen die nachstehend erläuterte Ausführungsform bevorzugt sein, bei der bei einem Detektieren des Kurzschlusses die elektrischen Trennelemente im Wesentlichen unmittelbar geöffnet werden. Sind als elektrische Trennelemente ausschließlich elektromechanische Relais vorgesehen, kann bevorzugt sein, zusätzlich eine Schmelzsicherung vorzusehen, insbesondere wenn die Relais beim Detektieren eines Kurzschlusses zunächst in einem geschlossenen Zustand bleiben sollen.

Allgemein kann vorgesehen sein, dass sich die Trennelemente der Verteilungspfade voneinander unterscheiden (im Folgenden auch als Mischform bezeichnet). Zum Beispiel kann einer der Verteilungspfade ein reversibel öffenbares Trennelement aufweisen und der andere Verteilungspfad ein lediglich einmalig bzw. dauerhaft öffenbares Trennelement.

Gemäß einer zweiten Alternative wird zum Detektieren des den Kurzschluss aufweisenden Verteilungspfads und/oder der Antriebseinheit (lediglich) eines der Trennelemente in einen trennenden Zustand versetzt, vorzugsweise unmittelbar nach dem ein Kurzschluss detektiert wurde, und eine daraufhin erfolgende etwaige Stromänderung innerhalb des Traktionsnetzes erfasst. Diese Alternative kann auf der vorstehend erwähnten Mischform basieren und das geöffnete Trennelement kann das reversibel öffenbare Trennelement sein. Im Falle optionaler Unterverteilungen innerhalb der Verteilungspfade kann vorgesehen sein, dass das in den trennenden Zustand versetzte Trennelement in demjenigen Verteilungspfad vorgesehen ist, der eine im Vergleich zu dem weiteren Verteilungspfad größere Anzahl von elektrischen Verbrauchern über eine Unterverteilung versorgt.

Dann, wenn als Stromänderung ein Stromabfall in einem vorbestimmten Mindestausmaß (zum Beispiel um mindestens 50 %) detektiert wird, kann darauf geschlossen werden, dass in demjenigen Verteilungspfad und/oder der hiermit verbundenen Antriebseinheit der Kurzschluss vorliegt, der das in den trennenden Zustand versetzte Trennelement aufweist. Dieses Trennelement kann daraufhin in dem trennenden bzw. geöffneten Zustand verbleiben, um den vom Kurzschluss betroffenen Teil des Traktionsnetzes elektrisch abzuschalten.

Hingegen kann dann, wenn als Stromänderung ein Stromabfall in keinem vorbestimmten Mindestausmaß detektiert wird, darauf geschlossen werden, dass in demjenigen Verteilungspfad und/oder der hiermit verbundenen Antriebseinheit der Kurzschluss vorliegt, der das in den trennenden Zustand versetzte Trennelement nicht aufweist. In diesem Fall kann das zunächst in den trennenden Zustand versetzte Trennelement wieder geschlossen werden, um das Bereitstellen einer Traktionskraft mittels der hiermit verbundenen Antriebseinheit zu gewährleisten. Stattdessen kann dasjenige Trennelement geöffnet werden, dass zunächst in dem nicht-trennenden Zustand verblieben ist. Im Fall der vorstehend genannten Mischform kann es sich hierbei um das lediglich einmalig öffenbare Trennelement handeln.

Weiter betrifft die Erfindung ein Traktionsnetz für ein elektrisch angetriebenes Fahrzeug mit:
- einer Spannungsquelle;
- mindestens zwei über jeweilige elektrische Verteilungspfade mit der Spannungsquelle verbundene elektrische Antriebseinheiten;
- wenigstens ein elektrisches Trennelement in jedem der Verteilungspfade zur selektiven Trennung der einem jeweiligen Verteilungspfad zugeordneten Antriebseinheit von der Spannungsquelle;
- einer Steuereinrichtung, die dazu eingerichtet ist zu detektieren, in welchem Verteilungspfad und/oder in welcher Antriebseinheit ein Kurzschluss vorliegt;
wobei das Traktionsnetz nach der Detektion eines Kurzschlusses in einem fahrbereiten Zustand betreibbar ist, bei dem lediglich diejenige Antriebseinheit von der Spannungsquelle getrennt ist, in der oder in deren Verteilungspfad der Kurzschluss vorliegt.

Das Traktionsnetz kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere können jegliche Weiterbildungen und Varianten der gleichlautenden Verfahrensmerkmale auch bei dem Traktionsnetz vorgesehen sein. Weiter kann das Traktionsnetz allgemein dazu eingerichtet sein, ein Verfahren gemäß jeglichen der vorstehenden oder nachstehenden Aspekte auszuführen. Insbesondere kann die Steuereinrichtung jegliche der vorstehend oder nachstehend geschilderten Maßnahmen veranlassen oder durchführen, um zu detektieren, in welchem Verteilungspfad und/oder welcher Antriebseinheit ein Kurzschluss vorliegt.

Im Folgenden werden anhand der beigefügten schematischen Figuren ein nicht anspruchsgemäßes Vergleichsbeispiel sowie Ausführungsformen der Erfindung erläutert.

In ihrer Art und/oder Funktion übereinstimmende Merkmale können dabei figurenübergreifend mit den gleichen Bezugszeichen versehen sein. Es stellen dar:
- Fig. 1: eine schematische Darstellung eines Traktionsnetzes gemäß einem ersten Ausführungsbeispiel, das ein Verfahren gemäß einer ersten nichtanspruchsgemäßen Variante ausführt; und
- Fig. 2: eine schematische Darstellung eines Traktionsnetzes gemäß einem zweiten Ausführungsbeispiel, das ein Verfahren gemäß einer zweiten Variante der Erfindung ausführt.

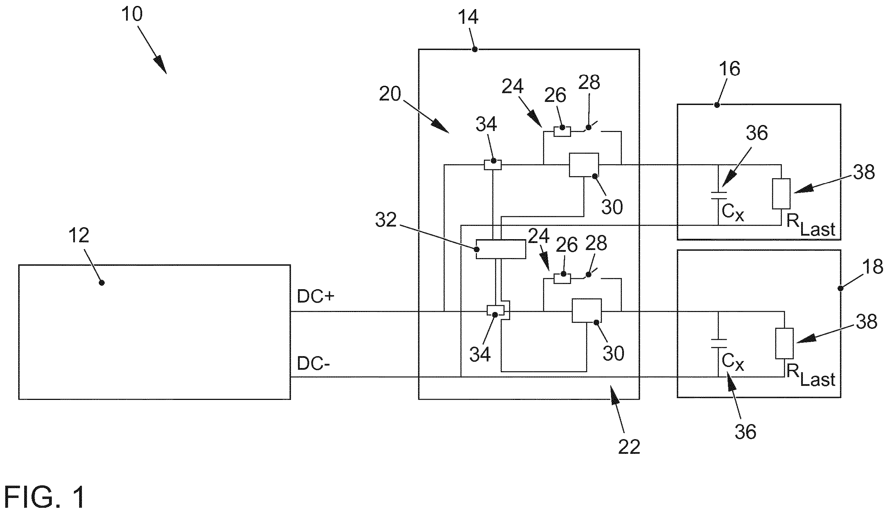

In Fig. 1 ist ein elektrisches Traktionsnetz 10 gemäß einem ersten Ausführungsbeispiel gezeigt. Allgemein ist das Traktionsnetz 10 dazu vorgesehen, in einem nicht dargestellten Fahrzeug verbaut zu werden und eine Traktionskraft für das Fahrzeug zumindest anteilig zu erzeugen.

Das Traktionsnetz 10 umfasst eine Spannungsquelle 12 in Form einer Hochvolt-Fahrzeugbatterie. Weiter umfasst das Traktionsnetz 10 einen Verteiler 14, der optional auch in die Batterie 12 integriert oder gemeinsam mit dieser als ein einzelnes Modul ausgebildet sein kann (d.h. bautechnisch mit der Batterie 12 zusammengefasst sein kann). Weiter umfasst das Traktionsnetz 10 eine erste Antriebseinheit 16 und eine zweite Antriebseinheit 18, die jeweils gleichartig zueinander ausgebildet sind. Die erste und zweite Antriebseinheit 16, 18 sind jeweils dazu eingerichtet, eine Traktionskraft für das Fahrzeug zu erzeugen.

Der Verteiler 14 umfasst zwei elektrische Verteilungspfade 20, 22. Ein erster elektrischer Verteilungspfad 20 ist dazu vorgesehen, die erste elektrische Antriebseinheit 16 elektrisch leitend mit der Spannungsquelle 12 zu verbinden, die Antriebseinheit 16 aber auch selektiv von der Spannungsquelle 12 elektrisch zu trennen. Der zweite elektrische Verteilungspfad 22 ist dazu eingerichtet, die zweite elektrische Antriebseinheit 18 elektrisch leitend mit der Spannungsquelle 12 zu verbinden, die Antriebseinheit 18 aber auch selektiv von der Strahlungsquelle 12 elektrisch zu trennen.

Jeder Verteilungspfad 20, 22 umfasst eine Vorladeeinrichtung 24, die wiederum einen Widerstand 26 und ein in Reihe hiermit geschaltetes mehrfach aktivierbares (d.h. reversibles) elektrisches Trennelement (Vorlade-Trennelement) 28 umfasst. Das Vorlade-Trennelement 28 einer jeden Vorladeeinrichtung 24 ist allgemein geöffnet und wird nur im Rahmen eines Vorladebetriebs geschlossen, wie nachstehend noch näher erläutert.

Weiter umfasst jeder Verteilungspfad 20, 22 ein elektrisches (Haupt-) Trennelement 30, das dazu eingerichtet ist, eine jeweils zugehörige Antriebseinheit 16, 18 mit der Spannungsquelle 12 elektrisch leitend zu verbinden oder hiervon zu trennen. Die nachstehend erläuterten Funktionen der Vorladeeinrichtung 24 könnten auch durch Halbleiterelemente bereitgestellt werden, welche vorzugsweise in das Trennelement 30 bautechnisch integriert sind.

Ferner erkennt man eine Steuereinrichtung 32 in Form eines Mikrocontrollers. Diese ist mit jedem elektrischen Trennelement 30 der Verteilungspfade 20, 22 signalübertragend verbunden, insbesondere in der Weise, dass die Steuereinrichtung 32 ein selektives Öffnen und Schließen der Trennelemente 30 veranlassen kann. Weiter umfasst jeder Verteilungspfad 20, 22 eine Strommesseinrichtung 34 z.B. in Form eines Shunt-Sensors. Auch die Strommesseinrichtungen 34 sind signalübertragend mit der Steuereinrichtung 32 verbunden und übermitteln an diese Messsignale hinsichtlich des gemessenen Stroms. In der gezeigten Variante sind die Strommesseinrichtungen 34 jeweils vor den elektrischen Trennelementen 30 und Vorladeeinrichtungen 24 positioniert (d.h. zwischen der Spannungsquelle 12 und der Vorladeeinrichtung 24 sowie den Trennelementen 30). Weiter messen die Strommesseinrichtungen 34 jeweils den Strom in einem mit dem positiven Potential der Spannungsquelle 12 gekoppelten Strang der Verteilungspfade 20, 22. Schließlich erkennt man in Fig. 1, dass jede der Antriebseinheiten 16, 18 eine mit C_{X} bezeichnete Kapazität 36 aufweist, die sich aus mehreren in den einzelnen elektrischen Komponenten der Antriebseinheiten 16, 18 definierten Kapazitäten zusammensetzen kann. Weiter ist ein mit R_{Last} bezeichneter Widerstand 38 gezeigt, der ebenfalls durch die elektrischen Komponenten der Antriebseinheiten 16, 18 definiert sein kann und insbesondere durch die Wicklungen nicht gesondert dargestellter elektrischer Antriebsmaschine in den Antriebseinheiten 16, 18. Bevorzugt ist vorgesehen, dass jede der Antriebseinheiten 16, 18 genau eine elektrische Antriebsmaschine zum Erzeugen einer Traktionskraft umfasst. Weiter ist bevorzugt, dass lediglich zwei redundant betreibbare Antriebseinheiten 16, 18 vorgesehen sind, welche von einer gemeinsamen Spannungsquelle 12 mit Strom versorgt werden.

Bei dem Ausführungsbeispiel von Fig. 1 ist vorgesehen, dass eine Kurzschlussdetektion z.B. in Form einer schlagartigen Stromänderung und insbesondere -zunahme detektiert wird. Dies kann beispielsweise durch eine der Strommesseinrichtungen 34 oder aber eine gesonderte Strommesseinrichtung in dem Traktionsnetz 10 erfolgen. Wurde ein Kurzschluss detektiert, werden die elektrischen Trennelemente 30 unmittelbar geöffnet. Dabei handelt es sich in dem vorliegenden Fall um elektrische Trennelemente 30 in Form von Halbleiterelementen, die eine vergleichsweise kurze Kurzschlussfestigkeit von wenigen Millisekunden oder auch Zehntelmillisekunden aufweisen. Durch unmittelbares Öffnen werden diese Bauteile vor einer dauerhaften Beschädigung infolge der zumindest vorübergehend sehr hohen Kurzschlussströme geschützt.

Die Steuereinrichtung 32 kann daraufhin die Antriebseinheiten 16, 18 in einen Freilauf-Betriebsmodus versetzen, um abrupte Geschwindigkeitsverluste des Fahrzeugs zu vermeiden. Weiter kann sie (vorzugsweise unmittelbar nach dem Detektieren des Kurzschlusses) die parallel zu den Trennelementen 30 geschalteten Vorladeeinrichtungen 24 über eine nicht dargestellte signalübertragende Verbindung veranlassen, eine Vorladung der Antriebseinheiten 16, 18 bzw. der dort verbauten Kapazitäten 36 vorzunehmen.

Dadurch, dass ein Kurzschluss detektiert wurde, ist davon auszugehen, dass sich zumindest eine der Kapazitäten 36 in den beiden Antriebseinheiten 16, 18 vollständig entladen hat. In Reaktion auf die daher zu erwartenden hohen anfänglichen Ladeströme bei zumindest einer der Kapazitäten 36 ist vorgesehen, die Vorladeeinrichtungen 24 (zumindest dann, wenn diese mittels Halbleiterelementen realisiert sind) in einem gepulsten Betrieb zu betreiben, d.h. die Vorlade-Trennelemente 28 (bzw. als Vorlade-Trennelemente fungierende Halbleiterelemente) mehrfach kurz hintereinander zu öffnen und zu schließen. Das Verwenden von Vorladeeinrichtungen 24 sowie eines etwaigen gepulsten Betriebs hiervon zum Laden von Kapazitäten 36 ist im Stand der Technik allgemein bekannt. Das Ausführungsbeispiel zeichnet sich jedoch insbesondere dadurch aus, einen solchen Vorladebetrieb in Reaktion auf eine Kurzschlussdetektion und insbesondere dazu zu aktivieren, um denjenigen Verteilungspfad 20, 22 und/oder diejenige Antriebseinheit 16, 18 zu identifizieren, in der der Kurzschluss vorliegt.

Genauer gesagt werden bei Aktivieren eines Vorladebetriebs durch die Steuereinrichtung 32 auch Spannungsmessungen in den jeweiligen Verteilungspfaden 20, 22 und/oder den Antriebseinheiten 16, 18 durchgeführt und diese Ergebnisse an die Steuereinrichtung 32 übermittelt. Hierfür kann auf bereits vorhandene Spannungsmesseinrichtungen innerhalb des Traktionsnetzes 10 zurückgegriffen werden (nicht dargestellt). Insbesondere anhand einer zeitlichen Änderung der gemessenen Spannung kann die Steuereinrichtung 32 daraufhin detektieren, ob ein Vorladen der Kapazität 36 in den Antriebseinheiten 16, 18 in einem gewünschten Ausmaß gelingt oder nicht. Wird beispielsweise keine Spannungszunahme über einem vorbestimmten Grenzwert (und insbesondere keine zeitliche Spannungsänderung oder Spannungsänderungsrate über einem vorbestimmten Grenzwert) festgestellt, ist ein Fehlerkriterium erfüllt und wird darauf geschlossen, dass das Vorladen der von der entsprechenden Spannungsmessung betroffenen Kapazität 36 nicht erfolgt. Die Steuereinrichtung 32 ermittelt daraufhin diejenige Antriebseinheit 16, 18 als vom Kurzschluss betroffen (bzw. denjenigen Verteilungspfad 20, 22, der zu dieser Antriebseinheit 16, 18 gehört), welche die Kapazität 36 mit dem ausbleibenden Spannungsanstieg umfasst.

In dem unwahrscheinlichen Fall, dass in beiden Antriebseinheiten 16, 18 auf diese Weise ein Kurzschluss ermittelt wird, verbleiben beide elektrischen Trennelemente 30 in einem geöffneten Zustand. In dem deutlich wahrscheinlicheren Fall, dass lediglich ein Kurzschluss in einer der Antriebseinheiten 16, 18 detektiert wird (und/oder den dazugehörigen Verteilungspfaden 20, 22), wird hingegen lediglich dasjenige elektrische Trennelement 30 wieder geschlossen, dessen Antriebseinheit 16, 18 bzw. Verteilungspfad 20, 22 nicht von dem Kurzschluss betroffen ist. Beispielsweise würde dann, wenn für die erste Antriebseinheit 16 und/oder dessen Verteilungspfad 20 ein Kurzschluss detektiert wird, das dortige elektrische Trennelement 30 in einem geöffneten und somit trennenden Zustand belassen werden, wohingegen das elektrische Trennelement 30 in dem zweiten Verteilungspfad 22, der die zweite elektrische Antriebseinheit 18 versorgt, wieder geschlossen werden würde und somit einen nicht-trennenden Zustand einnimmt. Dies führt dazu, dass der von dem Kurzschluss betroffene Bereich des Traktionsnetzes 10 in Form des ersten Verteilungspfades 20 und der ersten Antriebseinheit 16 elektrisch abgeschaltet wird, während der nicht von dem Kurzschluss betroffene Bereich bzw. Anteil in Form des zweiten Verteilungspfades 22 und der zweiten Antriebseinheit 18 weiter mit der Spannungsquelle 12 elektrisch leitend verbunden ist. Somit nimmt zumindest dieser Anteil des Traktionsnetzes 10 wieder einen fahrbereiten Zustand ein und ist allgemein dazu eingerichtet, eine Traktionskraft zum Fortbewegen des Fahrzeugs zu erzeugen.

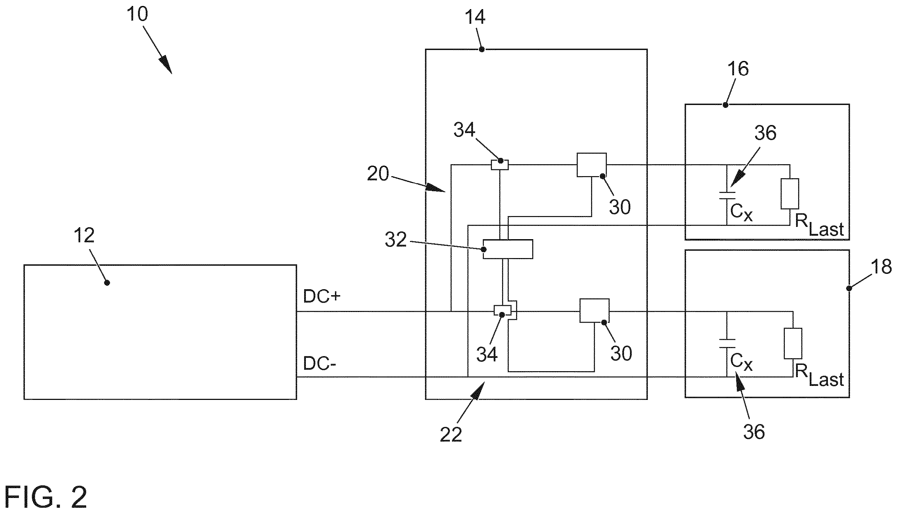

In Fig. 2 ist eine zweite Ausführungsform eines Traktionsnetzes 10 gezeigt, das ein erfindungsgemäßes Verfahren gemäß einer zweiten Variante ausführt. Dieses Traktionsnetz 10 unterscheidet sich hinsichtlich des Verteilers 14 von der vorstehend erläuterten Variante. Im Einzelnen erkennt man wiederum eine Spannungsquelle 12 zum Versorgen von ersten und zweiten Antriebseinheiten 16, 18, die prinzipiell gleichartig zu der vorstehend geschilderten Variante aus Fig. 1 ausgebildet sind. Der Verteiler 14 umfasst einen ersten und zweiten elektrischen Verteilungspfad 20, 22, um die Antriebseinheiten 16, 18 mit der Spannungsquelle 12 zu verbinden. Weiter umfasst der Verteiler 14 eine Steuereinrichtung 32, die mit Strommesseinrichtungen 34 in jedem der Verteilungspfade 20, 22 verbunden ist.

Die Verteilungspfade 20, 22 umfassen jedoch keine Vorladeeinrichtungen 24, wie bei der Variante aus Fig. 1. Allerdings umfassen sie nach wie vor elektrische Trennelemente 30, die jeweils mit der Steuereinrichtung 32 verbunden sind. In dem zweiten Ausführungsbeispiel sind diese Trennelemente 30 jedoch nicht als Halbleiterelemente ausgebildet. Stattdessen sind sie als pyrotechnische Trennelemente ausgebildet und allgemein dazu eingerichtet, nach Erhalten einer entsprechenden Anweisung von der Steuereinrichtung 32 dauerhaft eine elektrische Verbindung einer Antriebseinheit 16, 18, die mit dem entsprechenden Verteilungspfad 20, 22 verbunden ist, und der Spannungsquelle 12 zu unterbrechen (beispielsweise durch mechanisches Durchtrennen wenigstens eines elektrischen Leiters in den Verteilungspfaden 20, 22). Andererseits weisen die elektrischen Trennelemente 30 in dem gezeigten Fall aber eine vergleichsweise hohe Kurzschlussfestigkeit auf und sind insbesondere dazu eingerichtet, Kurzschlussströmen über mehrere Millisekunden standzuhalten, insbesondere mehrere 10 ms und beispielsweise wenigstens 20 ms.

Das Traktionsnetz 10 gemäß dem zweiten Ausführungsbeispiel wird deshalb derart betrieben, dass die elektrischen Trennelemente 30 beim Detektieren eines Kurzschlusses zunächst in einem geschlossenen (d.h. stromleitenden) Zustand verbleiben. Der Kurzschluss kann dabei analog zur Variante aus Fig. 1 detektiert werden. Das Belassen in dem geschlossenen Zustand ermöglicht jedoch, dass ein abrupter Geschwindigkeitsabfall des Fahrzeugs vermieden wird. Stattdessen wird über die Strommesseinrichtungen 34 in den Verteilungspfaden 20, 22 bzw. das Auswerten von deren Signalen durch die Steuereinrichtung 32 zunächst ermittelt, in welchem der Verteilungspfade 20, 22 bzw. der Antriebseinheiten 16, 18 der Kurzschluss vorliegt. Dies erfolgt in der Weise, dass zwischen dem Fehlerfall eines Kurzschlusses in den Verteilungspfaden 20, 22 bzw. Antriebseinheiten 16, 18 sowie einem kurzschlussfreien Zustand anhand vorab hinterlegter Kennlinien differenziert wird.

Genauer gesagt haben die Erfinder erkannt, dass dann, wenn in einem der Verteilungspfade 20, 22 oder der dazugehörigen Antriebseinheit 16, 18 ein Kurzschluss vorliegt, ein im Wesentlichen konstant hoher Kurzschlussstrom vorliegt, dessen Höhe maßgeblich durch die inneren Widerstände der Spannungsquelle 12 bestimmt wird. In demjenigen Verteilungspfad 20, 22 bzw. der dazugehörigen Antriebseinheit 16, 18, der (bzw. die) den Kurzschluss nicht aufweist, liegt zumindest unmittelbar nach dem Auftreten des Kurzschlusses zunächst ein Entladestrom der Kapazität 36 der entsprechenden Antriebseinheit 16, 18 vor. Dieser Entladestrom kann durch eine entsprechende Kennlinie beschrieben werden, sodass die Steuereinrichtung 32 aus einem Vergleich des unmittelbar bei einer Kurzschlussdetektion vorliegenden Stroms (oder auch der zeitlichen Stromänderung) in den Verteilungspfaden 20, 22 mit eben dieser Kennlinie feststellen kann, in welcher Antriebseinheit 16, 18 oder auch dazugehörigem Verteilungspfad 20, 22 aktuell der Entladestrom und somit kein Kurzschluss vorliegt. Für diesen Verteilungspfad 20, 22 kann vorgesehen sein, das Trennelement 30 in einem geschlossenen Zustand zu belassen. Andererseits kann bei demjenigen Trennelement 30, das zu dem anderen und somit von dem Kurzschluss betroffenen Verteilungspfad 20, 22 gehört, die pyrotechnische Durchtrennung des Verteilungspfads 20, 22 durch die Steuereinrichtung 32 aktiviert werden. Im Ergebnis führt dies erneut dazu, dass die von dem Kurzschluss betroffene Antriebseinheit 16 (bzw. deren dazugehöriger Verteilungspfad 20, 22) dauerhaft elektrisch abgeschaltet wird, wohingegen die den Kurzschluss nicht aufweisende Antriebseinheit 18 (bzw. deren Verteilungspfad 22) weiterhin zum Erzeugen einer Traktionskraft betreibbar ist.

Abschließend ist darauf hinzuweisen, dass das Vorsehen von Strommesseinrichtungen 34 in jedem der Verteilungspfade 20, 22 auch für weitere Diagnosezwecke verwendet werden kann. Insbesondere kann die Steuereinrichtung 32 hierdurch Messsignale von anderen Sensoren innerhalb der Verteilungspfade 20, 22 oder auch der Antriebseinheiten 16, 18 plausibilisieren. Zusätzlich oder alternativ können die über ein vorbestimmtes Zeitintervall aufgenommenen elektrischen Energiemengen der jeweiligen Antriebseinheiten 16, 18 bestimmt und zwecks Fehlerdiagnose miteinander verglichen werden.

Nicht dargestellt in den Figuren ist, dass jeweils wenigstens einer der Verteilungspfade 20, 22 auch eine Unterverteilung zur Versorgung weiterer Verbraucher umfassen kann (z.B. für den Kompressor einer Innenraumklimatisierung). Ein Trennelement 30 eines solchen Verteilungspfads 20, 22 ist vorzugsweise derart positioniert, dass es zwischen der Spannungsquelle 12 und der Unterverteilung positioniert ist, um auch Kurzschlüsse in der Unterverteilung des Verteilungspfads 20, 22 detektieren und abschalten zu können.

Nicht gezeigt ist auch ein weiteres Ausführungsbeispiel, das eine Mischform der Verteilungspfad-Varianten der Figuren 1 und 2 darstellt. Genauer gesagt kann in diesem Fall ein erster Verteilungspfad 20 gemäß der Variante aus Figur 1 (d. h. mit einem reversibel öffenbaren oder, genauer gesagt, reversibel öffen- und schließbaren Trennelement 30) und ein zweiter Verteilungspfad 22 gemäß der Variante aus Figur 2 (d. h. mit einem dauerhaft und nur einmalig trenn- bzw. öffenbaren Trennelement 30) ausgebildet sein. Bevorzugt ist dabei derjenige Verteilungspfad 20 mit dem reversiblen öffenbaren Trennelement 30 ausgebildet, der zum Beispiel über eine optionale Unterverteilung eine größere Anzahl von Verbrauchern versorgt.

In diesem Fall kann ein Kurzschluss über eine Strommesseinrichtung 34 innerhalb des Traktionsnetzes 10 bzw. in einem der Verteilungspfade 20, 22 detektiert werden, wobei es sich um die einzige Strommesseinrichtung 34 des Traktionsnetzes 10 handeln kann. Ist dies erfolgt, wird das reversibel öffenbare Trennelement 30 des ersten Verteilungspfads 20 umgehend geöffnet. Anschließend wird vorzugsweise über dieselbe Strommesseinrichtung 34 überwacht, ob es zu einem Stromabfall innerhalb des Traktionsnetzes 10 kommt. Ist dies der Fall, kann darauf geschlossen werden, dass der erste Verteilungspfad 20 (bzw. eine hiervon umfasste optionale Unterverteilung) den Kurzschluss aufweist. Das Trennelement 30 kann daraufhin in einem geöffneten Zustand verbleiben. Wird hingegen kein Stromabfall festgestellt, kann darauf geschlossen werden, dass der Kurzschluss in dem anderen Verteilungspfad 22 vorliegt, der das nur einmalig öffenbare Trennelement 30 umfasst. Dieses kann aufgrund seiner höheren Kurzschlussfestigkeit zumindest bis zur Vornahme der Strommessung geschlossen bleiben. Daraufhin kann dieses zum Beispiel pyrotechnische Trennelement 30 einmalig geöffnet werden und in dem geöffneten Zustand verbleiben, um den Verteilungspfad 22 elektrisch abzuschalten. Bei dieser Variante kann mit einem vergleichsweise geringem Detektionsaufwand die Kurzschlussdirektion zuverlässig und (zum Beispiel aufgrund der lediglich einen Strommesseinrichtung 34) bei geringen Kosten erfolgen.

### Bezugszeichenliste

- 10: Traktionsnetz
- 12: Spannungsquelle
- 14: Verteiler
- 16, 18: Antriebseinheit
- 20, 22: Verteilungspfad
- 24: Vorladeeinrichtung
- 26: Widerstand
- 28: Vorlade-Trennelement
- 30: Trennelement
- 32: Steuereinrichtung
- 34: Strommesseinrichtung
- 36: Kapazität
- 38: Widerstand

## Patentansprüche

1. Verfahren zum Betreiben eines Traktionsnetzes (10) eines elektrisch angetriebenen Fahrzeugs im Kurzschlussfall,
wobei das Traktionsnetz (10) eine Spannungsquelle (12) umfasst sowie mindestens zwei über jeweilige elektrische Verteilungspfade (20, 22) mit der Spannungsquelle (12) verbundene elektrische Antriebseinheiten (16, 18), und wobei in dem Verteilungspfad (20, 22) einer jeden Antriebseinheit (16, 18) wenigstens ein elektrisches Trennelement (30) zur selektiven Trennung von der Spannungsquelle (12) angeordnet ist,
wobei das Verfahren bei einer Detektion eines Kurzschlusses in dem Traktionsnetz (10) umfasst:
- Detektieren, in welchem Verteilungspfad (20, 22) und/oder in welcher Antriebseinheit (16, 18) der Kurzschluss vorliegt;
- Betreiben des Traktionsnetzes (20, 22) in einem fahrbereiten Zustand, wobei lediglich diejenige Antriebseinheit (16, 18) von der Spannungsquelle (12) getrennt ist, in der oder in deren Verteilungspfad (20, 22) der Kurzschluss vorliegt,
**dadurch gekennzeichnet, dass**
a) zum Detektieren des den Kurzschluss aufweisenden Verteilungspfads (20, 22) und/oder der den Kurzschluss aufweisenden Antriebseinheit (16, 18) ein Stromfluss zwischen den Verteilungspfaden (20, 22) detektiert wird, wobei dann, wenn der Stromfluss von einem ersten Verteilungspfad (20, 22) zu einem zweiten Verteilungspfad (20, 22) abnimmt, detektiert wird, dass der Kurzschluss in dem zweiten Verteilungspfad (20, 22) oder der hiermit verbundenen Antriebseinheit (16, 18) vorliegt, oder
b) zum Detektieren des den Kurzschluss aufweisenden Verteilungspfads (20, 22) und/oder der Antriebseinheit (16, 18) eines der Trennelemente (30) in einen trennenden Zustand versetzt wird und eine daraufhin erfolgende etwaige Stromänderung innerhalb des Traktionsnetzes (10) erfasst wird, wobei dann, wenn als Stromänderung ein Stromabfall in einem vorbestimmten Mindestausmaß detektiert wird, darauf geschlossen wird, dass in demjenigen Verteilungspfad (20, 22) und/oder der hiermit verbundenen Antriebseinheit (16, 18) der Kurzschluss vorliegt, der das Trennelement (30) aufweist;
und/oder wobei dann, wenn als Stromänderung ein Stromabfall in keinem vorbestimmten Mindestausmaß detektiert wird, darauf geschlossen wird, dass in demjenigen Verteilungspfad (20, 22) und/oder der hiermit verbundenen Antriebseinheit (16, 18) der Kurzschluss vorliegt, der das Trennelement (30) nicht aufweist.

2. Verfahren nach Anspruch 1, **dadurch gekennzeichnet, dass** bei einer Kurzschlussdetektion gemäß Verfahrensanspruch a) die elektrischen Trennelemente (30) in den Verteilungspfaden (20, 22) zunächst in einem nicht-trennenden Zustand verbleiben, wenn ein Kurzschluss detektiert wird.

3. Verfahren nach einem der vorangehenden Ansprüche, **dadurch gekennzeichnet, dass** ein Versetzen von wenigstens einem der elektrischen Trennelemente (30) in einen trennenden Zustand erst dann erfolgt, wenn eine vorbestimmte Mindestzeitdauer abgelaufen ist und/oder der den Kurzschluss aufweisende Verteilungspfad (20, 22) und/oder die Antriebseinheit (16, 18) detektiert wurde.

4. Verfahren nach einem der vorangehenden Ansprüche, **dadurch gekennzeichnet, dass** die elektrischen Trennelemente (30) eine vorbestimmte Kurzschlussfestigkeit aufweisen.

5. Traktionsnetz (10) für ein elektrisch angetriebenes Fahrzeug, mit:
- einer Spannungsquelle (12);
- mindestens zwei über jeweilige elektrische Verteilungspfade (20, 22) mit der Spannungsquelle (10) verbundene elektrische Antriebseinheiten (16, 18);
- wenigstens ein elektrisches Trennelement (30) in jedem der Verteilungspfade (20, 22) zur selektiven Trennung der einem jeweiligen Verteilungspfad (20, 22) zugeordneten Antriebseinheit (16, 18) von der Spannungsquelle (12); und
- einer Steuereinrichtung (32), die dazu eingerichtet ist, zu detektieren, in welchem Verteilungspfad (20, 22) und/oder in welcher Antriebseinheit (16, 18) ein Kurzschluss vorliegt;
wobei das Traktionsnetz (10) nach der Detektion eines Kurzschlusses in einem fahrbereiten Zustand betreibbar ist, bei dem lediglich diejenige Antriebseinheit (16, 18) von der Spannungsquelle (12) getrennt ist, in der oder in deren Verteilungspfad (20, 22) der Kurzschluss vorliegt,
**dadurch gekennzeichnet, dass**
die Steuereinrichtung (32) derart ausgebildet ist, eine Kurzschlussdetektion im Traktionsnetz (10) durchzuführen, indem
a) zum Detektieren des den Kurzschluss aufweisenden Verteilungspfads (20, 22) und/oder der den Kurzschluss aufweisenden Antriebseinheit (16, 18) ein Stromfluss zwischen den Verteilungspfaden (20, 22) detektiert wird, wobei dann, wenn der Stromfluss von einem ersten Verteilungspfad (20, 22) zu einem zweiten Verteilungspfad (20, 22) abnimmt, detektiert wird, dass der Kurzschluss in dem zweiten Verteilungspfad (20, 22) oder der hiermit verbundenen Antriebseinheit (16, 18) vorliegt, oder
b) zum Detektieren des den Kurzschluss aufweisenden Verteilungspfads (20, 22) und/oder der Antriebseinheit (16, 18) eines der Trennelemente (30) in einen trennenden Zustand versetzt wird und eine daraufhin erfolgende etwaige Stromänderung innerhalb des Traktionsnetzes (10) erfasst wird, wobei dann, wenn als Stromänderung ein Stromabfall in einem vorbestimmten Mindestausmaß detektiert wird, darauf geschlossen wird, dass in demjenigen Verteilungspfad (20, 22) und/oder der hiermit verbundenen Antriebseinheit (16, 18) der Kurzschluss vorliegt, der das Trennelement (30) aufweist;
und/oder wobei dann, wenn als Stromänderung ein Stromabfall in keinem vorbestimmten Mindestausmaß detektiert wird, darauf geschlossen wird, dass in demjenigen Verteilungspfad (20, 22) und/oder der hiermit verbundenen Antriebseinheit (16, 18) der Kurzschluss vorliegt, der das Trennelement (30) nicht aufweist.

## Claims

1. Method for operating a traction network (10) of an electrically driven vehicle in the event of a short circuit,
the traction network (10) comprising a voltage source (12) and at least two electric drive units (16, 18) connected to the voltage source (12) via respective electrical distribution paths (20, 22), and at least one electrical isolating element (30) for selective isolation from the voltage source (12) being arranged in the distribution path (20, 22) of each drive unit (16, 18), the method comprising, upon detection of a short circuit in the traction network (10):
- detecting in which distribution path (20, 22) and/or in which drive unit (16, 18) the short circuit is present;
- operating the traction network (20, 22) in a ready-to-drive state, where only the drive unit (16, 18) in which or in the distribution path (20, 22) of which the short circuit is present is isolated from the voltage source (12),
**characterized in that**
a) in order to detect the distribution path (20, 22) exhibiting the short circuit and/or the drive unit (16, 18) exhibiting the short circuit, a current flow between the distribution paths (20, 22) is detected, where if the current flow decreases from a first distribution path (20, 22) to a second distribution path (20, 22), it is detected that the short circuit is present in the second distribution path (20, 22) or in the drive unit (16, 18) connected thereto, or
b) in order to detect the distribution path (20, 22) exhibiting the short circuit and/or the drive unit (16, 18), one of the isolating elements (30) is placed in an isolating state and any resulting change in current within the traction network (10) is recorded, where if a current drop of a predetermined minimum magnitude is detected as a change in current, it is concluded that the short circuit is present in the distribution path (20, 22) and/or the drive unit (16, 18) connected thereto which has the isolating element (30); and/or where if a current drop of no predetermined minimum magnitude is detected as a change in current, it is concluded that the short circuit is present in the distribution path (20, 22) and/or the drive unit (16, 18) connected thereto which does not have the isolating element (30).

2. Method according to claim 1, **characterized in that** in a short circuit detection according to method claim a), the electrical isolating elements (30) in the distribution paths (20, 22) initially remain in a non-isolating state when a short circuit is detected.

3. Method according to either of the preceding claims, **characterized in that** a switching of at least one of the electrical isolating elements (30) into an isolating state occurs only when a predetermined minimum time period has elapsed and/or the distribution path (20, 22) exhibiting the short circuit and/or the drive unit (16, 18) has been detected.

4. Method according to any of the preceding claims, **characterized in that** the electrical isolating elements (30) have a predetermined short-circuit strength.

5. Traction network (10) for an electrically driven vehicle, comprising:
- a voltage source (12);
- at least two electric drive units (16, 18) connected to the voltage source (10) via respective electrical distribution paths (20, 22);
- at least one electrical isolating element (30) in each of the distribution paths (20, 22) for selectively isolating the drive unit (16, 18) assigned to a particular distribution path (20, 22) from the voltage source (12); and
- a control device (32) which is configured to detect in which distribution path (20, 22) and/or in which drive unit (16, 18) a short circuit is present;
the traction network (10) being able to be operated in a ready-to-drive state after the detection of a short circuit, in which state only the drive unit (16, 18) in which or in the distribution path (20, 22) of which the short circuit is present is isolated from the voltage source (12),
**characterized in that**
the control device (32) is designed to perform a short-circuit detection in the traction network (10) by the following:
a) in order to detect the distribution path (20, 22) exhibiting the short circuit and/or the drive unit (16, 18) exhibiting the short circuit, a current flow between the distribution paths (20, 22) is detected, where if the current flow decreases from a first distribution path (20, 22) to a second distribution path (20, 22), it is detected that the short circuit is present in the second distribution path (20, 22) or in the drive unit (16, 18) connected thereto, or
b) in order to detect the distribution path (20, 22) exhibiting the short circuit and/or the drive unit (16, 18), one of the isolating elements (30) is placed in an isolating state and any resulting change in current within the traction network (10) is recorded, where if a current drop of a predetermined minimum magnitude is detected as a change in current, it is concluded that the short circuit is present in the distribution path (20, 22) and/or the drive unit (16, 18) connected thereto which has the isolating element (30); and/or where if a current drop of no predetermined minimum magnitude is detected as a change in current, it is concluded that the short circuit is present in the distribution path (20, 22) and/or the drive unit (16, 18) connected thereto which does not have the isolating element (30).

## Revendications

1. Procédé permettant de faire fonctionner un réseau de traction (10) d'un véhicule à entraînement électrique en cas de court-circuit,
dans lequel le réseau de traction (10) comprend une source de tension (12) ainsi qu'au moins deux unités d'entraînement (16, 18) électriques reliées à la source de tension (12) par l'intermédiaire de chemins de distribution (20, 22) électriques respectifs, et dans lequel, dans le chemin de distribution (20, 22) de chaque unité d'entraînement (16, 18) est agencé au moins un élément de coupure (30) électrique destiné à la coupure sélective de la source de tension (12), dans lequel le procédé comprend, en cas de détection d'un court-circuit dans le réseau de traction (10) :
- la détection du chemin de distribution (20, 22) et/ou de l'unité d'entraînement (16, 18) dans lequel et/ou dans laquelle le court-circuit se produit ;
- le fonctionnement du réseau de traction (20, 22) dans un état prêt à rouler, dans lequel seule l'unité d'entraînement (16, 18), dans laquelle ou dans le circuit de distribution (20, 22) de laquelle se produit le court-circuit, est coupée de la source de tension (12),
**caractérisé en ce que**
a) pour détecter le chemin de distribution (20, 22) présentant le court-circuit et/ou l'unité d'entraînement (16, 18) présentant le court-circuit, un flux de courant est détecté entre les chemins de distribution (20, 22), dans lequel, lorsque le flux de courant d'un premier chemin de distribution (20, 22) vers un second chemin de distribution (20, 22) diminue, on détecte que le court-circuit se produit dans le second chemin de distribution (20, 22) ou dans l'unité d'entraînement (16, 18) qui y est reliée, ou
b) pour détecter le chemin de distribution (20, 22) présentant le court-circuit et/ou l'unité d'entraînement (16, 18), l'un des éléments de coupure (30) est mis en état de coupure et une éventuelle variation de courant qui s'ensuit au sein du réseau de traction (10) est acquise, dans lequel, si l'on détecte comme variation de courant une chute de courant d'une ampleur minimale prédéterminée, on en conclut que le court-circuit se produit dans le chemin de distribution (20, 22) et/ou dans l'unité d'entraînement (16, 18) qui y est reliée, qui présente l'élément de coupure (30) ; et/ou dans lequel si l'on détecte comme variation de courant une chute de courant inférieure à une ampleur minimale prédéfinie, on en conclut que le court-circuit se produit dans le chemin de distribution (20, 22) et/ou dans l'unité d'entraînement (16, 18) qui y est reliée, qui ne présente pas l'élément de coupure (30).

2. Procédé selon la revendication 1, **caractérisé en ce que,** lors de la détection d'un court-circuit conformément à la revendication de procédé a), les éléments de coupure (30) électriques dans les chemins de distribution (20, 22) restent dans un premier temps dans un état de non-coupure lorsqu'un court-circuit est détecté.

3. Procédé selon l'une des revendications précédentes,
**caractérisé en ce que** la mise d'au moins l'un des éléments de coupure (30) électriques dans un état de coupure n'a lieu qu'une fois qu'une durée minimale prédéterminée s'est écoulée et/ou que le chemin de distribution (20, 22) présentant le court-circuit et/ou l'unité d'entraînement (16, 18) a été détecté.

4. Procédé selon l'une des revendications précédentes,
**caractérisé en ce que** les éléments de coupure (30) électriques présentent une résistance aux courts-circuits prédéterminée.

5. Réseau de traction (10) pour un véhicule à entraînement électrique, comportant :
- une source de tension (12) ;
- au moins deux unités d'entraînement (16, 18) électriques reliées à la source de tension (10) par l'intermédiaire de chemins de distribution (20, 22) électriques respectifs ;
- au moins un élément de coupure (30) électrique dans chacun des chemins de distribution (20, 22) pour la coupure sélective de l'unité d'entraînement (16, 18) associée à un chemin de distribution (20, 22) respectif de la source de tension (12) ; et
- un équipement de commande (32), qui est conçu pour détecter dans quel circuit de distribution (20, 22) et/ou dans quelle unité d'entraînement (16, 18) un court-circuit se produit ;
dans lequel le réseau de traction (10) peut fonctionner, après la détection d'un court-circuit, dans un état prêt à rouler dans lequel seule l'unité d'entraînement (16, 18) dans laquelle ou dans le circuit de distribution (20, 22) de laquelle se produit le court-circuit est coupée de la source de tension (12),
**caractérisé en ce que**
l'équipement de commande (32) est conçu pour effectuer une détection de court-circuit dans le réseau de traction (10) **en ce que**
a) pour détecter le chemin de distribution (20, 22) présentant le court-circuit et/ou l'unité d'entraînement (16, 18) présentant le court-circuit, un flux de courant est détecté entre les chemins de distribution (20, 22), dans lequel, lorsque le flux de courant d'un premier chemin de distribution (20, 22) vers un second chemin de distribution (20, 22) diminue, on détecte que le court-circuit se produit dans le second chemin de distribution (20, 22) ou dans l'unité d'entraînement (16, 18) qui y est reliée, ou
b) pour détecter le chemin de distribution (20, 22) présentant le court-circuit et/ou l'unité d'entraînement (16, 18), l'un des éléments de coupure (30) est mis en état de coupure et une éventuelle variation de courant qui s'ensuit au sein du réseau de traction (10) est acquise, dans lequel, si l'on détecte comme variation de courant une chute de courant d'une ampleur minimale prédéterminée, on en conclut que le court-circuit se produit dans le chemin de distribution (20, 22) et/ou dans l'unité d'entraînement (16, 18) qui y est reliée, qui présente l'élément de coupure (30) ; et/ou dans lequel si l'on détecte comme variation de courant une chute de courant inférieure à une ampleur minimale prédéfinie, on en conclut que le court-circuit se produit dans le chemin de distribution (20, 22) et/ou dans l'unité d'entraînement (16, 18) qui y est reliée, qui ne présente pas l'élément de coupure (30).
